# EUROPÄISCHE PATENTSCHRIFT

(11) **EP 4 247 630 B1**
(45) Veröffentlichungstag und Bekanntmachung des Hinweises auf die Patenterteilung: **25.03.2026**
(21) Anmeldenummer: 21819354.8
(22) Anmeldetag: 15.11.2021
(51) Int. Cl.: B29C 43/24, B29C 43/32, B29C 43/50, B29C 43/58, B21B 1/24, B30B 3/00, B30B 3/04, B30B 15/00, B21B 27/10

(54) **WALZENANLAGE MIT EINER BENETZUNGSVORRICHTUNG UND VERFAHREN ZUM BETRIEB EINER WALZENANLAGE**
ROLLING INSTALLATION COMPRISING A WETTING DEVICE AND METHOD FOR OPERATING A ROLLING INSTALLATION
INSTALLATION DE LAMINAGE COMPRENANT UN DISPOSITIF DE MOUILLAGE ET PROCÉDÉ DE FONCTIONNEMENT D'UNE INSTALLATION DE LAMINAGE

(30) Priorität: 17.11.2020 DE 102020130265
(43) Veröffentlichungstag der Anmeldung: 27.09.2023
(73) Patentinhaber: Harburg-Freudenberger Maschinenbau GmbH, 21079 Hamburg (DE)
(72) Erfinder: QUAST, Alexander, 51598 Friesenhagen (DE)
(74) Vertreter: Epping - Hermann - Fischer
(86) Internationale Anmeldenummer: PCT/EP2021/081691
(87) Internationale Veröffentlichungsnummer: WO 2022/106356

(56) Entgegenhaltungen:
- EP-A1- 3 722 005
- WO-A1-2013/120750
- DE-A1- 102007 042 898
- DE-A1- 102008 050 392
- JP-A- 2002 254 462
- JP-A- 2004 188 458
- JP-A- H09 201 838
- US-A- 3 504 075
- US-A- 3 841 899
- US-A1- 2004 035 540

## Beschreibung

Die vorliegende Erfindung betrifft eine Walzenanlage, die beispielsweise bei der Herstellung und Verarbeitung eines Kautschuk- oder Silikonmaterials eingesetzt wird. Dies schließt auch Kautschukmischungen und Silikonmischungen ein. Es kann sich beispielsweise um eine Rezeptur für Reifen oder andere technische Gummi- oder Silikonwaren handeln.

Bei derartigen Walzenanlagen kann es zu einer Anhaftung des Materials an den Walzen kommen. Bisherige Lösungsansätze zur Vermeidung derartiger Anhaftungen sind die Verwendung optimierter Walzenoberflächen oder eine Temperierung, beispielsweise Kühlung, der Walzen. Dies hat jedoch oft nur einen kurzfristigen Effekt, so dass nach einigen Wochen erneut starke Anhaftungen auftreten. Somit muss das Material manuell von den Walzen abgezogen werden, was zu Stillständen und damit zu einer reduzierten Effizienz der Produktionslinie führt.

Aus der JP 2004 188458 A ist ein Warmwalzwerk zum Walzen von Stahl bekannt, bei der zur Vermeidung eines Schlupfs zwischen Arbeitsrollen und Backup-Rollen ein Reinigungsmittel auf die Backup-Rollen zur Entfernung von Schmiermittel aufgebracht wird. Die JP 2002 254462 A offenbart ein Walzwerk, bei dem zur Vermeidung einer Anhaftung eine geringe Menge an Wasserdampf auf eine Walze aufgebracht wird. Die DE 10 2007 042898 A1 offenbart ein Verfahren zur Walzspaltschmierung, bei dem eine Wasser-Öl-Mischung auf eine Walze aufgespritzt wird und in definierten Zeitabständen oder in Abhängigkeit von einem Prozessstatus ein Reinigungsmedium in Form von Heißwasser oder Wasserdampf aufgebracht wird. Die JP H09 201838 A offenbart ein Walzwerk, bei dem ein Flüssigkeitsfilm auf eine Walze aufgebracht wird, um eine Adhäsion von Teilchen an der Walze zu verhindern. Die US 3 504 075 A offenbart ein Verfahren zur Herstellung von Polymerfilmen mittels eines Kaltwalzwerkes, bei dem ein Schmiermittel zwischen Walze und Polymerfilm aufgebracht wird, um einen hydrodynamischen Keil zu formen. Die DE 10 2008 050392 A1 offenbart ein Verfahren zum Schmieren von Walzen, um Unebenheiten eines Walzbandes auszugleichen. Die WO 2013/120750 A1 offenbart ein Verfahren zum Schmieren eines Walspaltes, um die Oberflächenqualität des Walzgutes zu verbessern.

Aus der EP 3 722 005 A1 geht ein Walzwerk für Stahlbleche hervor, bei dem die Walzrollen mittels Kühlwasserzufuhrteilen gekühlt werden und wobei ein Oberflächenzustand der Walzrollen durch Beobachtungseinrichtungen erfasst wird, wobei das aufgebrachte Kühlwasser lokal an der Position der Beobachtungseinrichtungen entfernt wird.

Aus der US 2004/0035540 A1 geht eine Kalanderwalze für die Papierindustrie hervor, bei der Verschmutzungen an der Walze durch Benetzung der Walze mit einer Flüssigkeit und Aufnahme der Verschmutzung durch die Papierbahn entfernt werden.

Es ist eine Aufgabe der vorliegenden Erfindung, eine verbesserte Walzenanlage, eine Verwendung einer Benetzungsvorrichtung und ein Verfahren zum Betrieb einer Walzenanlage anzugeben.

Gemäß einem ersten Aspekt der vorliegenden Erfindung nach Anspruch 1 weist eine Walzenanlage ein oder mehrere Walzen zur Walzung eines Materials auf. Insbesondere kann durch die Walzung eine Formgebung und/oder Homogenisierung des Materials erfolgen. Beispielsweise wird durch die Walzung eine Bahn aus dem Material geformt. Beispielsweise weist die Walzenanlage mehrere zusammenwirkende Walzen auf. Das Material kann dabei in einen Spalt zwischen den Walzen eingezogen werden.

Das Material weist beispielsweise ein Kautschuk- oder Silikonmaterial auf und kann insbesondere auch als Materialmischung ("Compound") ausgebildet sein. Eine gewalzte Bahn des Materials wird auch als "Fell" bezeichnet. Aus dem Material werden beispielsweise Reifen oder andere technische Gummi- oder Silikonwaren hergestellt.

Die Walzenanlage weist eine Benetzungsvorrichtung zum Aufbringen einer Flüssigkeit auf wenigstens eine Walze auf. Durch die Benetzung soll eine Anhaftung des Materials an der Walze vermindert werden.

Die Benetzungsvorrichtung kann dabei so ausgebildet sein, dass alle oder zumindest mehrere der Walzen benetzt werden. Die Benetzungsvorrichtung kann auch derart ausgebildet sein, dass nur eine der Walzen, beispielsweise eine für Anhaftungen besonders anfällig oder konkret betroffene Walze, benetzt wird.

Eine derartige Benetzungsvorrichtung kann während des Betriebs eingesetzt werden, so dass die Produktion nicht gestoppt werden muss, um Anhaftungen manuell zu entfernen. Die Benetzungsvorrichtung gewährleistet ferner auch langfristig die Verminderung von Anhaftungen. Somit steigt die Verfügbarkeit der Anlage und somit der Produktionsdurchsatz pro Zeit.

Bei der Flüssigkeit kann es sich um Wasser, insbesondere reines Wasser, handeln. Die Flüssigkeit kann Seife enthalten, beispielsweise handelt es sich um ein Wasser-Seife-Gemisch. Abhängig von dem zu verarbeitenden Material können auch andere Flüssigkeiten, insbesondere Antihaftmittel, verwendet werden. Es ist auch möglich, zwischen unterschiedlichen Flüssigkeiten im laufenden Betrieb der Walzenanlage zu wechseln. Beispielsweise wird in kritischen Phasen des Betriebs oder bei Detektion einer zu starken Anhaftung ein stärkeres Antihaftmittel verwendet als in unkritischen Phasen des Betriebs oder bei unkritischer Anhaftung. Beispielsweise kann beim Anfahren der Walzenanlage ein Wasser-Seife-Gemisch und später reines Wasser verwendet werden. Auf diese Weise kann sichergestellt werden, dass in einer kritischen Anlaufphase keine zu starke Anhaftung auftritt und es kann gleichzeitig der Verbrauch von Seife oder anderen Chemikalien reduziert werden.

Beispielsweise wird die Flüssigkeit einem Flüssigkeitstank oder einer Leitung entnommen. Es ist auch möglich, dass die Flüssigkeit einem Tank entnommen wird, der bereits zur Verhinderung eines Aufeinanderklebens der gewalzten Bahnen vorhanden ist. Beispielsweise weist die Walzenanlage eine Batch-Off Anlage zur Weiterverarbeitung der gewalzten Bahnen auf, die einen derartigen Tank enthält.

Die Benetzungsvorrichtung weist beispielsweise ein oder mehrere Auslässe auf, mit denen die Flüssigkeit auf die Walze aufgebracht wird. Der Auslass ist beispielsweise als Düse oder Schwamm ausgebildet. Die Flüssigkeit wird beispielsweise auf die Oberfläche der Walze aufgesprüht, aufgedampft oder durch Abstreifen aufgetragen.

Es können mehrere Auslässe vorhanden sein. Beispielsweise können mehrere Auslässe zur Benetzung einer einzigen Walze vorhanden sein. Es können auch mehrere Auslässe zur Benetzung mehrerer Walzen vorhanden sein. Es ist auch möglich, einen Auslass derart auszubilden, dass er gleichzeitig mehrere Walzen benetzt.

Die Benetzungsvorrichtung kann eine Steuereinheit aufweisen, durch die die Benetzung gesteuert wird. Die Steuereinheit kann beispielsweise ein oder mehrere Ventile öffnen und Fördereinrichtungen anschalten, um die Flüssigkeit zum Auslass zu transportieren. Ebenso kann die Steuereinheit die Benetzung wieder beenden. Die Steuereinheit kann optional auch in eine weitere Steuereinheit integriert sein, beispielsweise in eine Steuereinheit eines Extruders oder einer Batch-Off Anlage.

Die Benetzungsvorrichtung kann derart ausgebildet sein, dass eine Benetzung kontinuierlich während des Betriebs der Walzenanlage stattfindet. Somit kann eine Anhaftung vorsorglich und dauerhaft verhindert werden.

Die Benetzungsvorrichtung kann auch derart ausgebildet sein, dass eine Benetzung wenigstens zum Start einer neuen Materialrezeptur oder einer neuen Charge stattfindet. Damit kann sichergestellt werden, dass der Verarbeitungsprozess geregelt anläuft, beispielsweise die Materialübergabe an die Batch-Off Anlage korrekt anläuft. Nach einer ersten Anlaufphase kann die Benetzung wieder abgeschaltet oder verringert werden. Alternativ kann die Benetzung durchgehend gleichbleiben.

Alternativ kann die Benetzungsvorrichtung derart ausgebildet sein, dass eine Benetzung nur bei tatsächlichem Auftreten einer Anhaftung stattfindet. Dies hat den Vorteil, dass ein Flüssigkeitseintrag in das Material und andere Störungen, die bei einer zu starken Benetzung auftreten können, minimiert werden. Zudem kann der Verbrauch an Flüssigkeit minimiert werden.

Die Benetzungsvorrichtung weist wenigstens einen Anhaftungssensor zur Detektierung einer Anhaftung des Materials an wenigstens einer der Walzen auf. Beispielsweise ist der Anhaftungssensor als Lichtschranke ausgebildet. Die Lichtschranke ist dabei derart positioniert, dass bei einer Anhaftung des Materials an einer der Walzen die Lichtschranke durchbrochen wird. Der Anhaftungssensor kann beispielsweise auch durch Bilderfassung und Bilderkennung oder 3D-Scan realisiert sein.

Der Anhaftungssensor kann mit einer Steuereinheit der Benetzungsvorrichtung verbunden sein. Die Steuereinheit kann derart ausgebildet sein, dass die Benetzung gezielt nur bei einer detektierten Anhaftung stattfindet. Beispielsweise wird die Benetzung gestartet, wenn eine Anhaftung detektiert wird, und es wird die Benetzung beendet, sobald detektiert wird, dass keine Anhaftung mehr auftritt. Somit wird der Einfluss der Benetzung auf die Materialeigenschaften möglichst reduziert. Es ist auch möglich, eine Flüssigkeitsmenge zu erhöhen bzw. zu reduzieren, sobald eine Anhaftung auftritt bzw. reduziert ist.

Diese Vorgehensweise beruht darauf, dass nicht jede Anhaftung bereits zu einer kritischen Störung des Prozessablaufs führt, sondern eine Anhaftung noch unkritisch sein kann, wenn das Material ein Stück weit von der Walze mitgenommen wird, sich dann aber löst, bevor es um die Walze herumgezogen wird. Der Anhaftungssensor kann detektieren, wenn das Material weiter als normal an der Walze anhaftet, jedoch bevor die Anhaftung einen kritischen Wert erreicht, insbesondere um die Walze herumgezogen wird. Somit kann der Anhaftungssensor die Tendenz zur verstärkten Anhaftung in einem frühen Stadium erkennen, so dass die Benetzung stattfinden kann, bevor ein kritisches Anhaftverhalten erreicht wird.

Es ist auch möglich, dass die Benetzungsvorrichtung zur kontinuierlichen Benetzung während des Betriebs der Walzenanlage ausgebildet ist. Dabei kann insbesondere die Benetzungsvorrichtung derart gesteuert werden, dass eine Benetzung nur dann stattfindet, wenn Material durch die Walzen durchgeführt wird. Somit erfolgt hier die Benetzung nicht erst bei aufgetretener Anhaftung. Es ist auch möglich, die Benetzung zu festgelegten Zeitpunkten immer wieder zu starten und dann wieder zu beenden. Auf diese Weise kann eine Anhaftung bereits vorbeugend verhindert werden.

Die Benetzungsvorrichtung kann zur Nachrüstung bestehender Anlagen vorgesehen sein. Dazu kann die Benetzungsvorrichtung ein Befestigungselement aufweisen, mit dem es an eine bestehende Walzenanlage angebracht werden kann. Beispielsweise wird ein Auslass der Benetzungs-vorrichtung an einem Träger einer Walze befestigt.

Die Benetzungsvorrichtung kann eine eigene Steuereinheit aufweisen. Es ist auch möglich, dass die Benetzungsvorrichtung an eine bestehende Steuereinheit der Walzenanlage angeschlossen wird und die Steuereinheit mit einem entsprechenden Algorithmus zur Ansteuerung der Benetzungsvorrichtung versehen wird. Die Steuereinheit kann insbesondere auch in eine bestehende Steuereinheit einer Batch-Off Anlage integriert sein.

Die Benetzungsvorrichtung kann die ein oder mehreren Anhaftsensoren aufweisen, die ebenfalls bei einer Nachrüstung an der Walzenanlage angebracht werden. Es ist auch möglich, dass die Walzenanlage bereits ein oder mehrere Anhaftsensoren aufweist, deren Signal auch zur Steuerung der Benetzungsvorrichtung verwendet werden kann.

Bei mehreren Walzen können mehrere Anhaftsensoren vorhanden sein, mit denen eine Anhaftung für jede Walze detektiert wird. Die Benetzungsvorrichtung kann derart ausgebildet sein, dass eine Benetzung nur für die Walze gestartet wird, bei der eine Anhaftung detektiert wird. Es können auch mehrere oder alle Walzen benetzt werden, sobald eine Anhaftung bei wenigstens einer Walze detektiert wird. Eine Anhaftung bei einer Walze kann ein Hinweis darauf sein, dass auch eine Anhaftung bei anderen Walzen in Kürze auftritt.

Gemäß einem weiteren Aspekt der vorliegenden Erfindung nach Anspruch 11 wird ein Verfahren zum Betrieb einer Walzenanlage zur Walzung eines Materials angegeben. Beispielsweise wird im Verfahren eine Bahn des Materials erzeugt. Zusätzlich oder alternativ dazu kann das Material im Verfahren homogenisiert werden. Die Walzenanlage weist ein oder mehrere Walzen auf, die im Betrieb mit einer Flüssigkeit benetzt werden, um eine Anhaftung des Materials an wenigstens einer der Walzen zu verhindern. Es kann sich dabei insbesondere um die vorhergehend beschriebene Walzenanlage handeln. Die Benetzung kann durch die vorhergehend beschriebene Benetzungsvorrichtung erfolgen.

Im Verfahren wird erfindungsgemäß eine Anhaftung eines Materials an den Walzen überwacht. Beispielsweise wird hierzu ein Anhaftsensor verwendet. Erfindungsgemäß wird die Benetzung in Abhängigkeit von der Anhaftung gesteuert. Beispielsweise wird die Benetzung erst bei Detektion einer Anhaftung gestartet. Es ist auch möglich, bei Detektion einer Anhaftung eine Flüssigkeitsmenge zu erhöhen.

Ebenso kann eine verminderte Anhaftung detektiert werden. Die Benetzung kann bei Detektion der verminderten Anhaftung beendet werden. Es ist auch möglich, eine Flüssigkeitsmenge bei Detektion einer verminderten Anhaftung zu reduzieren.

Wie vorhergehend beschrieben können bei Vorhandensein mehrerer Walzen auch mehrere Walzen benetzt werden. Es ist auch möglich, nur eine oder nur die für eine Anhaftung anfälligste oder konkret betroffene Walze zu benetzen. Bei einer Detektion einer Anhaftung an einer der Walzen kann die Benetzung nur für diese Walze oder auch für andere Walzen gestartet werden.

Die Benetzung kann wie vorhergehend beschrieben auch durchgehend während des Betriebs oder zu fest vorgegebenen Zeitpunkten erfolgen.

Die vorliegende Erfindung umfasst mehrere Aspekte, insbesondere Vorrichtungen und Verfahren. Die für einen der Aspekte beschriebenen Merkmale, Eigenschaften und Ausführungsformen sollen entsprechend auch für den anderen Aspekt gelten.

Zudem ist die Beschreibung der hier angegebenen Gegenstände nicht auf die speziellen Ausführungsformen beschränkt. Vielmehr können die Merkmale der einzelnen Ausführungsformen - soweit technisch sinnvoll - miteinander kombiniert werden. Im Folgenden werden die hier beschriebenen Gegenstände anhand schematischer Ausführungsbeispiele näher erläutert.

Es zeigen:
- Figur 1: eine Ausführungsform einer Walzenanlage in schematischer Schnittansicht,
- Figur 2: eine Ausführungsform einer Benetzungsvorrichtung in einem schematischen Schaltbild,
- Figur 3: ein Verfahren zum Betrieb einer Walzenanlage in einem schematischen Blockdiagramm.

Vorzugsweise verweisen in den folgenden Figuren gleiche Bezugszeichen auf funktionell oder strukturell entsprechende Teile der verschiedenen Ausführungsformen.

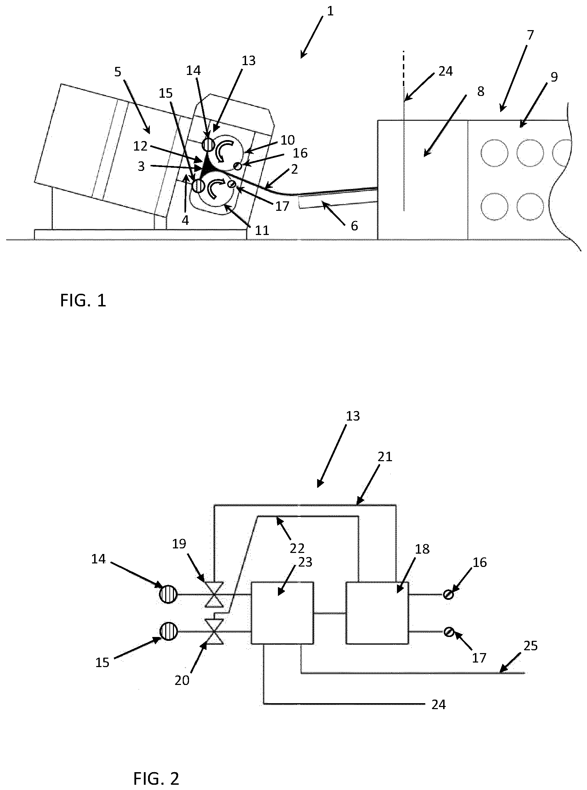

Figur 1 zeigt eine Ausführungsform einer Walzenanlage 1 in schematischer Ansicht. Die Walzenanlage 1 dient der Herstellung einer Bahn 2 aus einem Material 3, wie z.B. Kautschuk oder Silikon. Dies schließt auch Kautschuk- oder Silikonmischungen ein. Derartige Bahnen 2 werden auch als "Felle" bezeichnet. Beispielsweise kann es sich um eine Rezeptur für Reifen oder technische Gummi- oder Silikonwaren wie Dichtungen oder Formteile handeln. Die Walzenanlage 1 kann zur Mischung, Homogenisierung, Formgebung und/oder Abkühlung des Materials 3 dienen. Es sind auch Ausführungsformen möglich, bei denen eine Walzenanlage hauptsächlich zur Mischung oder Homogenisierung eines Materials dient. Die Walzenanlage kann auch in einem ersten Prozessschritt zur Mischung und/oder Homogenisierung des Materials und in einem weiteren Prozessschritt zur Erzeugung einer Bahn 2 des Materials verwendet werden.

Die Walzenanlage 1 weist zwei zusammenwirkende Walzen 10, 11 auf. Das Material 3 wird den Walzen 10, 11 über eine Walzen-Zuführung 4, beispielsweise einen Auslass eines Extruders 5, zugeführt. Dabei wird das Material 3 in einen Spalt 12 zwischen den Walzen 10, 11 eingezogen und durch die sich rotierenden Walzen 10, 11 in die Form einer flachen Bahn 2 gebracht. Es sind auch Ausführungsformen möglich, bei denen das Material 3 gravimetrisch von oben den Walzen 10, 11 zugeführt wird.

Die Walzen 10, 11 können beheizt oder gekühlt sein. Vorliegend ist eine erste Walze 10, insbesondere eine Oberwalze, und ein zweite Walze 11, insbesondere eine Unterwalze, vorgesehen. Je nach Aufbau der Walzenanlage 1 kann es sich beispielsweise auch um eine Vorderwalze und eine Hinterwalze handeln. Die Walzenanlage 1 kann weitere Walzen aufweisen. Ein derartiges System von zusammenwirkenden, übereinander angeordneten Walzen 10, 11 wird auch als Kalandar bezeichnet.

Die durch die zusammenwirkenden Walzen 10, 11 erzeugte Bahn 2 wird über ein Förderband 6 weitertransportiert und einer Batch-Off Anlage 7 zugeführt. Die Entnahme einer Bahn 2 kann beispielsweise bei einem Walzwerk auch erst nach einem Mischvorgang unter Verwendung derselben Walzen 10, 11 erfolgen. Die Batch-Off Anlage 7 dient der Weiterbehandlung der Bahn 2. Beispielsweise weist die Batch-Off Anlage 7 einen mit Antihaftmittel gefüllten Tank 8 auf. Es kann sich hierbei beispielsweise um eine Mischung aus Wasser und Seife ("Antitack") handeln. Das Antihaftmittel wird auf die Bahn 2 aufgebracht, um Verklebungen zu verhindern. Beispielsweise wird die Bahn 2 durch das Antihaftmittel im Tank 8 gezogen oder mit dem Antihaftmittel besprüht. Die Batch-Off Anlage 7 kann eine Trockenkammer 9 aufweisen, in der die Bahn 2 getrocknet und gekühlt wird.

Bei einigen Materialien 3, insbesondere modernen Mischungen, kann es zu einem unerwünschten und nachteiligen Anhaften des Materials 3 an den Walzen 10, 11 kommen. Dies kann zu ungeplanten Stillständen und damit zu einer reduzierten Effizienz der Produktionslinie führen. Es ist möglich, dass in einem ersten Prozessschritt, beispielsweise einem Mischvorgang, ein Anhaften an einer oder mehreren der Walzen 10, 11 erlaubt oder sogar gewünscht ist, und bei einem nachfolgenden Prozessschritt, beispielsweise einer Entnahme einer Bahn 2, ein Anhaften nachteilig ist.

Um ein unerwünschtes Anhaften an den Oberflächen der Walzen 10, 11 zu vermindern oder zu eliminieren, weist die Walzenanlage 1 eine Benetzungsvorrichtung 13 auf, die mindestens eine der Walzen 10, 11 mit einer Flüssigkeit benetzt. Bei der Flüssigkeit handelt es sich beispielswiese um Wasser oder ein Antihaftmittel wie z.B. ein Wasser-Seife-Gemisch ("Antitack"). Das Antihaftmittel wird beispielsweise dem Tank 8 der Batch-Off Anlage 7 über eine Zuführung 24 entnommen.

Die Flüssigkeit kann aufgesprüht oder aufgedampft werden. Somit schließt das Aufbringen der Flüssigkeit ein, dass die Flüssigkeit beim Aufbringvorgang als Dampf vorliegt. Es ist auch möglich, die Flüssigkeit mit einem Schwamm auf die Walzen 10, 11 aufzubringen. Die Benetzungsvorrichtung 13 weist hierzu ein oder mehrere Auslässe 14, 15 auf. Die Auslässe 14, 15 sind je nach Art der Aufbringung beispielsweise als Düsen oder Schwamm ausgebildet. Vorliegend ist ein erster Auslass 14 an einer ersten Walze 10 und ein zweiter Auslass 15 an einer zweiten Walze 11 angeordnet und dient zum Aufbringen der Flüssigkeit auf die jeweilige Walze 10, 11. Die Auslässe 14, 15 können wie gezeigt auf der Seite der Materialzuführung zu den Walzen 10, 11 angeordnet sein. Die Auslässe 14, 15 können beispielsweise auch an der gegenüberliegenden Seite, also an der Seite des Materialaustritts aus den Walzen 10, 11 angeordnet sein.

Die Benetzungsvorrichtung 13 kann im Betrieb kontinuierlich eine Flüssigkeit auf die Walzen 10, 11 aufbringen. Die Benetzungsvorrichtung 13 kann aber auch so ausgebildet sein, dass eine Flüssigkeit nur bei Bedarf, also bei einem tatsächlichen Anhaften des Materials 3 an einer der Walzen 10, 11 aufgebracht wird. Es ist auch möglich, dass bei einer Detektion einer Anhaftung die Flüssigkeitsmenge erhöht und/oder bei Detektion einer Verminderung der Anhaftung die Flüssigkeitsmenge vermindert wird.

In der gezeigten Ausführungsform weist die Benetzungsvorrichtung 13 wenigstens einen Anhaftsensor 16, 17 zur Detektion einer Anhaftung des Materials 3 an den Walzen 10, 11 auf. Insbesondere ist ein erster Anhaftsensor 16 dazu ausgebildet, eine Anhaftung an der ersten Walze 10 zu detektieren und ein zweiter Anhaftsensor 17 ist dazu ausgebildet, eine Anhaftung an der zweiten Walze 11 zu detektieren.

Die Anhaftsensoren 16, 17 sind beispielsweise als Lichtsensoren, insbesondere in Form von Lichtschranken ausgebildet. Alternativ können die Anhaftsensoren 16, 17 beispielsweise auch über Bilderfassung und Bilderkennung oder 3D-Scan realisiert sein. Bei Detektion einer Anhaftung des Materials 3 an einer der Walzen 10, 11 kann ein Signal an eine Steuereinheit 18 (siehe Figur 2) gesendet werden.

Figur 2 zeigt in einem schematischen Schaltbild eine Ausführungsform einer Benetzungsvorrichtung 13. Es kann sich insbesondere um die in der Walzenanlage 1 aus Figur 1 verwendete Benetzungsvorrichtung 13 handeln.

Die Benetzungsvorrichtung 13 weist eine Steuereinheit 18 auf, die die Signale der Anhaftsensoren 16, 17 empfängt und die Benetzung steuert. Insbesondere kann die Steuereinheit 18 die Abgabe der Flüssigkeit aus den Auslässen 14, 15 gezielt steuern. Erhält die Steuereinheit 18 von einer oder beiden Anhaftsensoren 16, 17 ein Signal, dass eine Anhaftung auftritt, bringt sie die Benetzung einer oder beider der Walzen 10, 11 in Gang. Dabei kann die Steuereinheit 18 die Benetzung nur derjenigen der Walzen 10, 11 starten, bei der eine unerwünschte Anhaftung detektiert wird. Alternativ kann eine Benetzung beider Walzen 10, 11 gestartet werden, auch wenn nur bei einer der Walzen 10, 11 eine unerwünschte Anhaftung detektiert wurde.

Zum Start der Benetzung sendet die Steuereinheit 18 ein Signal an ein oder mehrere Ventile 19, 20, die daraufhin geöffnet werden. Die Ventile 19, 20 können auch als Proportionalventile ausgebildet sein, so dass die abgegebene Flüssigkeitsmenge justiert werden kann. Die Ventile 19, 20 können über separate Ansteuerungen 21, 22 einzeln angesteuert werden. Die Ventile 19, 20 können auch über eine gemeinsame Ansteuerung geöffnet werden, so dass hier unabhängig von der betroffenen Walze 10, 11 eine Benetzung beider Walzen 10, 11 erfolgen kann.

Die Flüssigkeit zur Benetzung kann beispielsweise dem Tank 8 der Batch-Off Anlage 7 entnommen werden. Es kann somit eine Zuführung 24 vom Tank 8 vorgesehen sein. Zusätzlich oder alternativ dazu kann die Flüssigkeit auch Wasser, insbesondere reines Wasser, sein und es kann zusätzlich oder alternativ eine Zuführung 25 von einem Wassertank oder einer Leitung vorgesehen sein. Es ist auch möglich, die Flüssigkeiten zur Benetzung während des Betriebs zu wechseln. Beispielsweise kann in einer Anlaufphase ein Wasser-Seife Gemisch und später reines Wasser zur Benetzung verwendet werden. Beispielsweise kann auch, sobald eine zu starke Anhaftung detektiert wird, wieder auf das Wasser-Seife Gemisch umgeschaltet werden. Es ist auch möglich, Flüssigkeit, die zur Benetzung verwendet wurde und überschüssig ist, in einem Kreislauf wieder der Benetzung zuzuführen.

Falls erforderlich, wird die Flüssigkeit über eine Fördereinrichtung 23, wie z.B. eine Pumpe, gefördert. Die Fördereinrichtung 23 kann durch die Steuereinheit 18 gesteuert werden. Bei ausreichendem Flüssigkeitsdruck kann die Flüssigkeit auch ohne Fördereinrichtung 23 bei Öffnung der Ventile 19, 20 zu den Auslassen 14, 15 gelangen.

Wenn von den Anhaftsensoren 16, 17 detektiert wird, dass keine oder nur mehr eine geringe Anhaftung stattfindet, kann die Benetzung wieder beendet werden. Insbesondere können die Anhaftsensoren 16, 17 ein entsprechendes Signal an die Steuereinheit 18 schicken, die daraufhin die optional vorhandene Fördereinrichtung 23 abschaltet und die Ventile 19, 20 schließt. Es ist auch möglich, einen Flüssigkeitsspeicher, wie z.B. einen Blasenspeicher, vorzusehen, der sofort bei Öffnen der Ventile 19, 20 eine Flüssigkeit zur Benetzung abgibt. Somit kann der Flüssigkeitsspeicher die Zeit zum Anlaufen der Fördereinrichtung 23 überbrücken und/oder die Einschaltintervalle der Fördereinrichtung 23 reduzieren.

Die Benetzungsvorrichtung 13 kann Bestandteil einer Walzenanlage 1 sein oder es kann eine Walzenanlage 1 auf einfache Weise mit der Benetzungsvorrichtung 13 nachgerüstet werden. Beispielsweise werden ein oder mehrere Auslässe 14, 15 an ein Gehäuse der Walzenanlage 1 in der Nähe der ein oder mehreren Walzen 10, 11 angebracht.

Es ist auch möglich, dass eine nachzurüstende Walzenanlage 1 bereits mit Anhaftsensoren 16, 17 zur Detektion einer Anhaftung ausgestattet ist. Auch eine Steuereinheit 18 kann bereits vorhanden sein, die das Signal der Anhaftsensoren 16, 17 verarbeitet und ursprünglich dazu ausgebildet ist, die Walzen 10, 11 zu stoppen, sobald eine zu große Anhaftung detektiert wird. Bei Nachrüstung der Walzenanlage 1 mit einer Benetzungsvorrichtung 13 kann die Steuereinheit 18 so umprogrammiert werden, dass sie, anstatt die Walzen 10, 11 zu stoppen, die Benetzung startet. Die Walzen 10, 11 werden beispielsweise erst dann gestoppt, wenn die Benetzung, beispielsweise innerhalb weniger Sekunden, nicht den gewünschten Erfolg liefert.

Somit können zur Nachrüstung die Auslässe 14, 15 an einer bestehenden Walzenanlage 1 angebracht und mit einer bestehenden Steuereinheit 18 verbunden werden. Zusätzlich werden noch Ventile 19, 20 und Zuführungen 24, 25 zu einem Flüssigkeitstank oder einer Leitung mit den Auslässen 14, 15 und der Steuereinheit 18 verbunden.

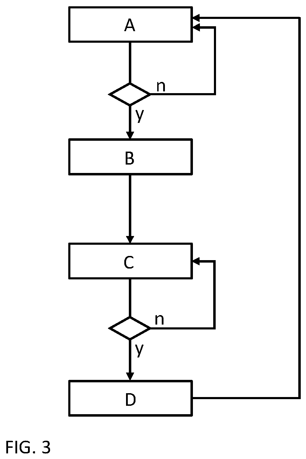

Figur 3 zeigt im Blockdiagramm ein Verfahren zum Betrieb einer Walzenanlage, beispielsweise der Walzenanlage 1 aus Figur 1. Die zur Beschreibung des Verfahrens verwendeten Bezugszahlen beziehen sich auf die Walzenanlage 1 aus Figur 1, allerdings ist das Verfahren nicht auf die konkrete Walzenanlage 1 beschränkt.

Die Walzenanlage 1 wird gestartet. Es wird ein Material 3, insbesondere eine Materialmischung, den ein oder mehreren Walzen 10, 11 zugeführt. Die Benetzungsvorrichtung 13 kann beim Start der Walzenanlage 1 in einen Bereitschaftsmodus gebracht werden.

In einem Schritt A wird überwacht, ob eine Anhaftung des Materials 3 an einer der Walzen 10, 11 stattfindet. Es können dabei beide Walzen 10, 11 oder nur eine der Walzen 10, 11 mittels ein oder mehrerer Anhaftsensoren 16, 17 überwacht werden.

Wird eine Anhaftung detektiert ("y"), wird in einem Schritt B die Benetzung einer oder mehrerer der Walzen 10, 11 mit einer Flüssigkeit, beispielsweise einem Wasser-Seife-Gemisch, gestartet. Alternativ dazu kann die Benetzung bereits erfolgen und es wird bei Detektion einer Anhaftung die Flüssigkeitsmenge erhöht. Wird keine Anhaftung detektiert ("n"), findet keine Änderung in der Benetzung statt und die Überwachung in Schritt A wird fortgesetzt.

Bei einer detektierten Anhaftung ("y") wird in einem Schritt C überwacht, ob die Anhaftung vermindert oder beendet ist.

Falls keine oder nur noch eine geringe Anhaftung detektiert wird ("y"), wird die Benetzung in einem Schritt D wieder abgeschaltet oder es wird die Flüssigkeitsmenge reduziert. Dabei kann eine Selbstoptimierung durchgeführt werden, so dass eine optimale Flüssigkeitsmenge zur Vermeidung einer Anhaftung aufgebracht wird. Andernfalls ("n") wird der Status der Anhaftung weiter überwacht.

Nach Abschalten der Benetzung oder Reduktion der Flüssigkeitsmenge wird in einem Schritt A wieder überwacht, ob eine Anhaftung auftritt.

Alternativ kann eine Benetzung auch kontinuierlich erfolgen oder zu festgesetzten Zeitpunkten an- und abgeschaltet werden, so dass eine Anhaftung bereits vorsorglich verhindert wird. Beispielsweise kann die Benetzung auch beim Start oder bereits vor dem eigentlichen Start der Walzenanlage 1 erfolgen und dann später verringert werden oder abgeschaltet werden. Sofern in einem ersten Prozessschritt der Walzenanlage 1 eine Anhaftung erwünscht und in einem zweiten Prozessschritt eine Anhaftung unerwünscht ist, kann die Benetzung auch beispielsweise erst mit dem zweiten Prozessschritt erfolgen. Bei Detektion einer Anhaftung kann die Benetzung und Überwachung der Anhaftung dann wie vorhergehend beschrieben stattfinden.

Beispielsweise findet die Benetzung kontinuierlich statt, solange sich Material 3 zwischen den Walzen 10, 11 befindet. Insbesondere kann detektiert werden, ob sich Material 3 im Extruder 5 befindet und somit in Kürze den Walzen 10, 11 zugeführt wird. Die Detektion erfolgt beispielsweise durch den Motorstrom eines Antriebs des Extruders 5, über Kraftmessdosen am Extruder 5 oder über einen Temperatursensor oder Massedrucksensor an der Walzen-Zuführung 4. Daraufhin kann die Benetzung gestartet werden.

Zudem kann detektiert werden, ob das Material 3 komplett durch die Walzen 10, 11 gelaufen ist, so dass sich kein Material mehr zwischen den Walzen 10, 11 befindet. Eine derartige Detektion erfolgt beispielsweise über einen Sensor am Förderband 6, beispielsweise einen Ultraschallsensor, über die Betriebszeit oder über die Anzahl der Umdrehungen der Walzen 10, 11. Es ist auch eine Detektion über einen Temperatursensor oder über einen Massedrucksensor möglich. Bei einer entsprechenden Detektion kann die Benetzung beendet werden.

### Bezugszeichenliste

- 1: Walzenanlage
- 2: Bahn
- 3: Material
- 4: Walzen-Zuführung
- 5: Extruder
- 6: Förderband
- 7: Batch-Off Anlage
- 8: Tank
- 9: Trockenkammer
- 10: Walze
- 11: Walze
- 12: Spalt
- 13: Benetzungsvorrichtung
- 14: Auslass
- 15: Auslass
- 16: Anhaftsensor
- 17: Anhaftsensor
- 18: Steuereinheit
- 19: Ventil
- 20: Ventil
- 21: Ansteuerung
- 22: Ansteuerung
- 23: Fördereinrichtung
- 24: Zuführung
- 25: Zuführung

## Patentansprüche

1. Walzenanlage,
aufweisend ein oder mehrere Walzen (10, 11) zur Walzung eines Materials (3) zur Formung einer Bahn aus dem Material (3),
und aufweisend eine Benetzungsvorrichtung (13) zum Aufbringen einer Flüssigkeit auf wenigstens eine der Walzen (10, 11) zur Verminderung einer Anhaftung der gewalzten Bahn des Materials (3) an der Walze (10, 11),
aufweisend eine Steuereinheit (18) zur Steuerung der Benetzung und wenigstens einen Anhaftsensor (16, 17) zur Detektierung einer Anhaftung der gewalzten Bahn des Materials (3) an wenigstens einer der Walzen (10, 11),
wobei die Steuereinheit (18) dazu ausgebildet ist, Signale des Anhaftsensors (16, 17) zu empfangen und zur Steuerung der Benetzungsvorrichtung (13) zu verwenden.

2. Walzenanlage nach einem der vorhergehenden Ansprüche,
die zur Walzung eines Kautschuk- oder Silikon-Materials geeignet ist.

3. Walzenanlage nach einem der vorhergehenden Ansprüche, aufweisend wenigstens zwei zusammenwirkende Walzen (10, 11), wobei zwischen den Walzen (10, 11) ein Spalt (12) zum Einzug des Materials (13) ausgebildet ist.

4. Walzenanlage nach Anspruch 3,
wobei die Benetzungsvorrichtung (13) zur Benetzung beider der zwei zusammenwirkenden Walzen (10, 11) ausgebildet ist.

5. Walzenanlage nach einem der vorhergehenden Ansprüche,
bei der die Benetzungsvorrichtung (13) wenigstens einen Auslass (14, 15) zum Aufbringen der Flüssigkeit auf die Walzen (10, 11) aufweist, wobei der Auslass (14, 15) als Düse oder Schwamm ausgebildet ist.

6. Walzenanlage nach einem der vorhergehenden Ansprüche,
bei dem der Anhaftsensor (16, 17) als Lichtschranke, durch Bilderkennung oder durch 3D-Scan ausgebildet ist.

7. Walzenanlage nach einem der vorhergehenden Ansprüche,
bei der die Benetzungsvorrichtung (13) dazu ausgebildet ist, die Walzen (10, 11) nur bei Detektion einer Anhaftung zu benetzen.

8. Walzenanlage nach einem der Ansprüche 1 bis 6,
bei der die Benetzungsvorrichtung (13) dazu ausgebildet ist, die Walzen (10, 11) im Betrieb kontinuierlich zu benetzen oder nur zu festgelegten Zeitpunkten zu benetzen.

9. Walzenanlage nach einem der vorhergehenden Ansprüche,
bei der die Benetzungsvorrichtung (13) zur Aufbringung einer Flüssigkeit in Form von Wasser oder eines Wasser-Seife Gemischs geeignet ist.

10. Walzenanlage nach einem der vorhergehenden Ansprüche, wobei die Benetzungsvorrichtung (13) dazu ausgebildet ist, die Flüssigkeit auf die Walzen (10, 11) aufzudampfen.

11. Verfahren zum Betrieb einer Walzenanlage (1) zur Walzung eines Materials (3) zur Formung einer Bahn aus dem Material (3), wobei die Walzenanlage (1) ein oder mehrere Walzen (10, 11) aufweist, wobei die Walzen (10, 11) im Betrieb mit einer Flüssigkeit benetzt werden, um eine Anhaftung der gewalzten Bahn des Materials (3) an wenigstens einer der Walzen (10, 11) zu vermindern, wobei eine Anhaftung der gewalzten Bahn des Materials (3) an den Walzen (10, 11) überwacht wird, wobei die Benetzung in Abhängigkeit von der Anhaftung gesteuert wird.

12. Verfahren nach Anspruch 11,
wobei die Benetzung bei Detektion einer zu starken Anhaftung gestartet wird oder wobei eine Flüssigkeitsmenge zur Benetzung bei Detektion einer zu starken Anhaftung erhöht wird.

13. Verfahren nach einem der Ansprüche 11 oder 12,
aufweisend eine Steuereinheit (18) zur Steuerung der Benetzung und wenigstens einen Anhaftsensor (16, 17) zur Detektierung einer Anhaftung der gewalzten Bahn des Materials (3) an wenigstens einer der Walzen (10, 11),
wobei die Steuereinheit (18) dazu ausgebildet ist, Signale des Anhaftsensors (16, 17) zu empfangen und zur Steuerung der Benetzungsvorrichtung (13) zu verwenden.

14. Verfahren nach einem der Anspruch 11 bis 13,
wobei eine Anhaftung der gewalzten Bahn des Materials (3) an den Walzen (10, 11) überwacht wird, wobei die Benetzung bei Detektion einer Verminderung der Anhaftung beendet wird oder
wobei eine Flüssigkeitsmenge zur Benetzung nach Detektion einer Verminderung der Anhaftung reduziert wird.

15. Verfahren nach einem der Ansprüche 11 bis 14,
wobei während des Betriebs zwischen unterschiedlichen Flüssigkeiten gewechselt wird.

## Claims

1. A rolling mill,
comprising one or more rolls (10, 11) for rolling a material (3) in order to form a sheet from the material (3),
and comprising a wetting device (13) for applying a liquid to at least one of the rolls (10, 11) in order to reduce adhesion of the rolled sheet of the material (3) to the roll (10, 11),
comprising a control unit (18) for controlling the wetting and comprising at least one adhesion sensor (16, 17) for detecting adhesion of the rolled sheet of the material (3) to at least one of the rolls (10, 11),
wherein the control unit (18) is configured to receive signals from the adhesion sensor (16, 17) and to use them for controlling the wetting apparatus (13).

2. The rolling mill according to one of the preceding claims,
which is suitable for rolling a rubber or silicone material.

3. The rolling mill according to one of the preceding claims,
comprising at least two interacting rolls (10, 11), wherein a gap (12) for drawing in the material (13) is formed between the rolls (10, 11).

4. The rolling mill according to Claim 3,
wherein the wetting apparatus (13) is configured for wetting both of the two interacting rolls (10, 11).

5. The rolling mill according to one of the preceding claims,
in which the wetting apparatus (13) has at least one outlet (14, 15) for application of the liquid to the rolls (10, 11), wherein the outlet (14, 15) is in the form of a nozzle or sponge.

6. The rolling mill according to one of the preceding claims,
in which the adhesion sensor (16, 17) is in the form of a light barrier, an image-recognition device or a 3D-scanning device.

7. The rolling mill according to one of the preceding claims,
in which the wetting apparatus (13) is configured to wet the rolls (10, 11) only if adhesion is detected.

8. The rolling mill according to one of Claims 1 to 6, in which the wetting apparatus (13) is configured such that the rolls (10, 11), during operation, are wetted continuously or are wetted only at defined times.

9. The rolling mill according to one of the preceding claims,
in which the wetting apparatus (13) is suitable for applying a liquid in the form of water or a water/soap mixture.

10. The rolling mill according to one of the preceding claims,
wherein the wetting apparatus (13) is configured to apply the liquid to the rolls (10, 11) by vapour deposition.

11. Method for operating a rolling mill (1) for rolling a material (3) in order to form a sheet from the material (3), wherein the rolling mill (1) has one or more rolls (10, 11), wherein, during operation, the rolls (10, 11) are wetted with a liquid in order to reduce adhesion of the rolled sheet of the material (3) to at least one of the rolls (10, 11), wherein adhesion of the rolled sheet of the material (3) to the rolls (10, 11) is monitored, wherein the wetting is controlled according to the adhesion.

12. Method according to Claim 11,
wherein the wetting is started if excessive adhesion is detected, or wherein an amount of liquid for wetting is increased if excessive adhesion is detected.

13. Method according to either of Claims 11 or 12,
comprising a control unit (18) for controlling the wetting and comprising at least one adhesion sensor (16, 17) for detecting adhesion of the rolled sheet of the material (3) to at least one of the rolls (10, 11),
wherein the control unit (18) is configured to receive signals from the adhesion sensor (16, 17) and to use them for controlling the wetting apparatus (13).

14. Method according to one of Claims 11 to 13,
wherein adhesion of the rolled sheet of the material (3) to the rolls (10, 11) is monitored, wherein, upon detection of a reduction in adhesion, the wetting is ended, or wherein an amount of liquid for wetting is reduced after detection of a reduction in adhesion.

15. Method according to one of Claims 11 to 14,
wherein, during operation, it is switched between different liquids.

## Revendications

1. Installation de laminage,
comprenant un ou plusieurs rouleaux (10, 11) destinés à laminer un matériau (3) pour former une bande à partir du matériau (3),
et comprenant un dispositif de mouillage (13) destiné à appliquer un liquide à au moins l'un des rouleaux (10, 11) afin de réduire l'adhérence de la bande de matériau (3) laminée au rouleau (10, 11),
comprenant une unité de commande (18) destinée à commander le mouillage et au moins un capteur d'adhérence (16, 17) destiné à détecter l'adhérence de la bande de matériau (3) laminée à au moins l'un des rouleaux (10, 11),
l'unité de commande (18) étant conçue pour recevoir des signaux en provenance du capteur d'adhérence (16, 17) et pour les utiliser afin de commander le dispositif de mouillage (13).

2. Installation de laminage selon l'une quelconque des revendications précédentes,
qui est appropriée pour laminer un matériau de caoutchouc ou de silicone.

3. Installation de laminage selon l'une quelconque des revendications précédentes,
comprenant au moins deux rouleaux (10, 11) coopérant mutuellement, un interstice (12) destiné à l'introduction du matériau (13) étant formé entre les rouleaux (10, 11).

4. Installation de laminage selon la revendication 3,
dans laquelle le dispositif de mouillage (13) est conçu pour mouiller les deux rouleaux (10, 11) coopérant mutuellement.

5. Installation de laminage selon l'une quelconque des revendications précédentes,
dans laquelle le dispositif de mouillage (13) présente au moins une sortie (14, 15) destinée à appliquer le liquide aux rouleaux (10, 11), la sortie (14, 15) se présentant sous la forme d'une buse ou d'une éponge.

6. Installation de laminage selon l'une quelconque des revendications précédentes,
dans laquelle le capteur d'adhérence (16, 17) est réalisé sous forme de barrière lumineuse, par reconnaissance d'image ou par balayage 3D.

7. Installation de laminage selon l'une quelconque des revendications précédentes,
dans laquelle le dispositif de mouillage (13) est conçu pour ne mouiller les rouleaux (10, 11) que lorsqu'une adhérence est détectée.

8. Installation de laminage selon l'une quelconque des revendications 1 à 6,
dans laquelle le dispositif de mouillage (13) est conçu pour mouiller les rouleaux (10, 11) en continu pendant le fonctionnement ou pour ne les mouiller qu'à des moments déterminés.

9. Installation de laminage selon l'une quelconque des revendications précédentes,
dans laquelle le dispositif de mouillage (13) est approprié pour appliquer un liquide sous forme d'eau ou d'un mélange eau-savon.

10. Installation de laminage selon l'une quelconque des revendications précédentes,
dans laquelle le dispositif de mouillage (13) est conçu pour évaporer le liquide sur les rouleaux (10, 11).

11. Procédé de fonctionnement d'une installation de laminage (1) destinée à laminer un matériau (3) afin de former une bande à partir du matériau (3), dans lequel l'installation de laminage (1) comprend un ou plusieurs rouleaux (10, 11), les rouleaux (10, 11) étant mouillés avec un liquide pendant le fonctionnement afin de réduire l'adhérence de la bande de matériau (3) laminée à au moins l'un des rouleaux (10, 11), l'adhérence de la bande de matériau (3) laminée aux rouleaux (10, 11) étant surveillée, le mouillage étant commandé en fonction de l'adhérence.

12. Procédé selon la revendication 11,
dans lequel le mouillage commence lors de la détection d'une adhérence excessive ou dans lequel une quantité de liquide destinée au mouillage est augmentée lors de la détection d'une adhérence excessive.

13. Procédé selon l'une quelconque des revendications 11 et 12,
comprenant une unité de commande (18) destinée à commander le mouillage et au moins un capteur d'adhérence (16, 17) destiné à détecter l'adhérence de la bande de matériau (3) laminée à au moins l'un des rouleaux (10, 11),
l'unité de commande (18) étant conçue pour recevoir des signaux en provenance du capteur d'adhérence (16, 17) et pour les utiliser afin de commander le dispositif de mouillage (13).

14. Procédé selon l'une quelconque des revendications 11 à 13,
dans lequel l'adhérence de la bande de matériau (3) laminée aux rouleaux (10, 11) est surveillée, le mouillage étant terminé lors de la détection d'une réduction de l'adhérence, ou une quantité de liquide destinée au mouillage étant réduite après détection d'une réduction de l'adhérence.

15. Procédé selon l'une quelconque des revendications 11 à 14,
dans lequel il est procédé à un changement entre différents liquides pendant le fonctionnement.
